# EUROPÄISCHE PATENTANMELDUNG

(11) **EP 4 105 960 A1**
(43) Veröffentlichungstag der Anmeldung: **21.12.2022**
(21) Anmeldenummer: 21179943.2
(22) Anmeldetag: 17.06.2021
(51) Int. Cl.: H01H 39/00, H02H 3/087

(54) **SICHERUNGSEINRICHTUNG FÜR EIN ELEKTRISCHES ENERGIEVERSORGUNGSNETZ**

(71) Anmelder: Siemens Energy Global GmbH & Co. KG, 81739 München (DE); Siemens Energy AS, 0596 Oslo (NO)
(72) Erfinder: Schulz, Veiko, 21244 Buchholz I.D.N (DE); Voss, Wolfgang, 91097 Oberreichenbach (DE)

(57) **Zusammenfassung**

Die Erfindung betrifft eine Sicherungseinrichtung (10) für ein elektrisches Energieversorgungsnetz (12), insbesondere ein gleichspannungsbeaufschlagtes Energieversorgungsnetz, mit zwei voneinander getrennt angeordneten Anschlusskontakten (16, 18), einem mit den Anschlusskontakten (16, 18) verbundenen elektrischen Leiter (14) zum Herstellen einer elektrischen Verbindung zwischen den Anschlusskontakten (16, 18) und einer im Bereich des elektrischen Leiters (14) angeordneten pyrotechnischen Auslöseeinheit (20) zum irreversiblen Trennen der Anschlusskontakte (16, 18) durch zumindest teilweises Zerstören der elektrischen Leitung (14).

Die Sicherungseinrichtung (10) weist wenigstens eine Sensoreinheit (22) zum Erfassen einer physikalischen Auslösegröße und zum Bereitstellen eines Sensorsignals abhängig von der erfassten physikalischen Auslösegröße und eine mit der Sensoreinheit (22) gekoppelte Zündeinheit (24) auf, die ausgebildet ist, abhängig von einem vorgebbaren Wert des Sensorsignals die pyrotechnische Auslöseeinheit (20) auszulösen.

## Beschreibung

Die Erfindung betrifft eine Sicherungseinrichtung für ein elektrisches Energieversorgungsnetz, insbesondere ein gleichspannungsbeaufschlagtes Energieversorgungsnetz, mit zwei voneinander getrennt angeordneten Anschlusskontakten, einem mit den Anschlusskontakten verbundenen elektrischen Leiter zum Herstellen einer elektrischen Verbindung zwischen den Anschlusskontakten und einer im Bereich des elektrischen Leiters angeordneten pyrotechnischen Auslöseeinheit zum irreversiblen Trennen der Anschlusskontakte durch zumindest teilweises Zerstören der elektrischen Leitung. Weiterhin betrifft die Erfindung eine Verbindungseinrichtung zum elektrischen Verbinden von wenigstens zwei Netzwerkteilen eines Energieversorgungsnetzes abhängig von einem Verbindungszustand der Verbindungseinrichtung, wobei die Verbindungseinrichtung eine Schalteinheit aufweist. Die Erfindung betrifft ferner ein elektrisches Energieversorgungsnetz für ein Fahrzeug, insbesondere ein Wasserfahrzeug, mit wenigstens einem ersten und einem zweiten Netzwerkteil sowie einer elektrischen Verbindungseinrichtung zum elektrischen Verbinden der wenigstens zwei Netzwerkteile abhängig von einem Verbindungszustand der Verbindungseinrichtung.

Energieversorgungsnetze sowie Sicherungseinrichtungen, die beispielsweise bei Energieversorgungsnetzen Anwendung finden, sind im Stand der Technik umfänglich bekannt, sodass es eines gesonderten druckschriftlichen Nachweises hierfür dem Grunde nach nicht bedarf. Eine Sicherungseinrichtung dient dazu, bei Auftreten eines gestörten Zustands in einem elektrischen Stromkreis, insbesondere den eines des Energieversorgungsnetzes, eine Unterbrechung für diesen Stromkreis herbeizuführen, sodass dem Bereich des Energieversorgungsnetzes, in dem der gestörte Zustand aufgetreten ist, möglichst keine elektrische Energie zugeführt wird. Das heißt, dass der Stromfluss unterbrochen wird. Dieser Fall tritt besonders bei einem elektrischen Kurzschluss auf, bei dem zwei unterschiedliche elektrische Potentiale des Energieversorgungsnetzes, zwischen denen eine Versorgungsspannung anliegt, aus unterschiedlichsten Gründen miteinander elektrisch verbunden werden, sodass ein sehr großer unerwünschter Stromfluss stattfinden kann. Aufgrund des großen Stromflusses kann unter Umständen die Versorgungsspannung nicht mehr aufrechterhalten werden, sodass am Energieversorgungsnetz angeschlossene elektrische Einrichtungen nicht mehr hinreichend mit elektrischer Energie in vorgebbarer Weise versorgt werden können. Darüber hinaus kann durch die hohe elektrische Energieaufnahme im Bereich der Störung ein gefährlicher Zustand, beispielsweise ein Brand oder dergleichen auftreten. Die Sicherungseinrichtung dient daher unter anderem dazu, den Stromfluss in einem solchen Fall zuverlässig zu unterbrechen. Darüber hinaus kann auch vorgesehen sein, dass weitere Störungsereignisse zum Auslösen der Sicherungseinrichtung herangezogen werden können. Eine solche Störung kann zum Beispiel die Einwirkung eines Blitzes auf eines der elektrischen Potentiale des Energieversorgungsnetzes sein. Auch weitere Störungsereignisse können vorgesehen sein und zum Auslösen der Sicherungseinrichtung herangezogen werden.

Die Sicherungseinrichtung ist vorzugsweise ein wenigstens zweipoliges elektrisches Bauteil, welches zumindest zwei voneinander getrennt angeordnete Anschlusskontakte aufweist, die sicherungseinrichtungsseitig vorzugsweise ausschließlich durch den elektrischen Leiter miteinander elektrisch verbunden sind. Dadurch kann im nichtausgelösten Zustand ein sehr kleiner elektrischer Widerstand erreicht werden, sodass die Sicherungseinrichtung in diesem Betriebszustand keinen beziehungsweise einen vernachlässigbaren Einfluss auf den bestimmungsgemäßen Betrieb des Energieversorgungsnetzes ausübt. Im ausgelösten Betriebszustand ist dagegen der elektrische Leiter zumindest teilweise zerstört, sodass eine elektrische Verbindung zwischen den beiden Anschlusskontakten unterbrochen ist. Die beiden Anschlusskontakte sind in diesem Betriebszustand daher im Wesentlichen elektrisch isoliert voneinander.

Auch wenn häufig vorgesehen ist, dass die Sicherungseinrichtung lediglich die zwei Anschlusskontakte aufweist, kann je nach Konstruktion der Sicherungseinrichtung auch vorgesehen sein, dass die Sicherungseinrichtung weitere Anschlusskontakte aufweisen kann, beispielsweise um einen Auslösemechanismus auszulösen, Betriebszustandsdaten zu übermitteln und/oder dergleichen. Darüber hinaus besteht natürlich auch die Möglichkeit, dass die Sicherungseinrichtung für mehrere unterschiedliche elektrische Potentiale des Energieversorgungsnetzes entsprechende Paare von Anschlusskontakten aufweist und somit nicht nur für ein einziges elektrisches Potential, sondern gleich für mehrere elektrische Potentiale eine entsprechende Auslösefunktionalität bereitzustellen vermag.

Im Bereich kleiner Leistungen, besonders in Kombination mit Niederspannung, kommen als Sicherungseinrichtungen häufig sogenannte Schmelzsicherungen zum Einsatz. Die Schmelzsicherungen zeichnen sich dadurch aus, dass die beiden Anschlusskontakte durch den elektrischen Leiter miteinander elektrisch verbunden sind, wobei der elektrische Leiter hinsichtlich seiner Abmessungen und des Werkstoffs so gewählt ist, dass er bei Auftreten einer vorgegebenen Überlastungserscheinung aufschmilzt und damit die elektrische Verbindung zwischen den Anschlusskontakten unterbricht. Darüber hinaus ist es mittlerweile auch bekannt, elektronische Sicherungseinrichtungen vorzusehen, bei denen mittels eines geeigneten Halbleiterschaltelements die entsprechende elektrische Verbindung zwischen den Anschlusskontakten hergestellt oder unterbrochen werden kann, abhängig von einem jeweiligen Schaltzustand des elektronischen Schaltelements. Ein solches Schaltelement kann zum Beispiel ein Transistor, ein Thyristor oder dergleichen sein. Elektronische Sicherungseinrichtungen haben den Vorteil, dass sie in der Regel reversibel sind, also nach dem Auslösen in der Regel kein Austausch der Sicherungseinrichtung erforderlich ist. Gleichwohl führt ihr Einsatz zu teilweise nicht vernachlässigbaren elektrischen Verlusten und ist hinsichtlich der Schaltleistung häufig begrenzt. Besonders bei einem Schalten von Gleichströmen können darüber hinaus auch spezifische Probleme auftreten, insbesondere Lichtbögen oder dergleichen. Daher ist der Einsatz derartiger Sicherungseinrichtungen bei Energieversorgungsnetzen nur begrenzt möglich.

Der Erfindung liegt die Aufgabe zugrunde, eine zuverlässige Sicherungsfunktionalität mittels einer Sicherungseinrichtung bereitzustellen, die auch für große Leistungen, insbesondere Hochspannung und große Ströme, insbesondere Gleichströme, zuverlässig nutzbar ist.

Als Lösung werden mit der Erfindung eine Sicherungseinrichtung und ein Energieversorgungsnetz gemäß den unabhängigen Ansprüchen vorgeschlagen.

Vorteilhafte Weiterbildungen ergeben sich durch Merkmale der abhängigen Ansprüche.

In Bezug auf eine gattungsgemäße Sicherungseinrichtung wird mit der Erfindung insbesondere vorgeschlagen, dass diese wenigstens eine Sensoreinheit zum Erfassen einer physikalischen Auslösegröße und zum Bereitstellen eines Sensorsignals abhängig von der erfassten physikalischen Auslösegröße und eine mit der Sensoreinheit gekoppelte Zündeinheit aufweist, die ausgebildet ist, abhängig von einem vorgebbaren Wert des Sensorsignals die pyrotechnische Auslöseeinheit auszulösen.

In Bezug auf eine gattungsgemäße Verbindungseinrichtung wird mit der Erfindung insbesondere vorgeschlagen, dass diese wenigstens eine Sicherungseinrichtung gemäß der Erfindung aufweist.

In Bezug auf ein gattungsgemäßes elektrisches Energieversorgungsnetz wird mit der Erfindung insbesondere vorgeschlagen, dass dieses wenigstens eine Sicherungseinrichtung gemäß der Erfindung und/oder wenigstens eine Verbindungseinrichtung gemäß der Erfindung aufweist.

Insbesondere bei großen Leistungen, Hochspannung, großen Strömen und/oder dergleichen hat sich der Einsatz einer Sicherungseinrichtung als geeignet herausgestellt, die eine pyrotechnische Auslöseeinheit zum irreversiblen Trennen der Anschlusskontakte durch zumindest teilweises Zerstören der elektrischen Leitung aufweist. In diesem Zusammenhang offenbart zum Beispiel die DE 10 2016 124 176 A1 ein elektrisches Unterbrechungsschaltglied, insbesondere zum Unterbrechen von hohen Strömen bei hohen Spannungen.

Die Erfindung basiert unter anderem auf dem Gedanken, dass die Sicherungseinrichtung mit der pyrotechnischen Auslöseeinheit dahingehend verbessert werden kann, dass sie neben der Sensoreinheit auch eine mit der Sensoreinheit gekoppelte Zündeinheit aufweist, mit der das Zünden der pyrotechnischen Auslöseeinheit in vorgebbarer Weise zuverlässig gesteuert werden kann. Die Zündeinheit kann zu diesem Zweck vorzugsweise eine elektronische Schaltungsanordnung aufweisen, die eine entsprechende Signalverarbeitung für das Sensorsignal bereitzustellen vermag, sodass eine genau einstellbare Auslösecharakteristik realisiert werden kann. Es braucht also keine separate Auslöseleitung wie im Stand der Technik mehr vorgesehen zu sein. Es kann also mit der Erfindung eine kompakte Sensoreinrichtung erreicht werden, die als einzeln handhabbares Bauteil wie ein Schmelzsicherungseinsatz genutzt werden kann.

Aufgrund der besonders günstigen Eigenschaften beim Trennen eines Stromkreises erweist sich die erfindungsgemäße Sensoreinrichtung besonders für den Einsatz bei großen Leistungen, beispielsweise bei einer Leistung von größer als etwa 100 kW, insbesondere etwa 1500 kW, sowohl bei Nutzung von Niederspannung als auch bei der Nutzung von Hochspannung, vorzugsweise bei Hochspannung, insbesondere bei einer elektrischen Spannung von größer als etwa 2 kV, sowie beispielsweise bei großen elektrischen Strömen von größer als etwa 0,5 kA, vorzugsweise zum Beispiel in einem Bereich von etwa 1,5 kA oder größer, für besonders geeignet. Bei derartigen Einsätzen ist die Nutzung der üblichen Schmelzsicherungseinsätze nur begrenzt möglich. Insbesondere beim Schalten von Gleichströmen bei elektrischen Spannungen, die größer als etwa 1 kV sind, sind keine geeigneten Schmelzsicherungen oder vergleichbar geeignete Elemente bekannt. Auch der Einsatz elektronischer Sicherungseinrichtungen ist nur begrenzt möglich. Die Erfindung erweitert also das Anwendungsspektrum für Sicherungseinrichtungen, sodass beispielsweise auch aufwändige und teure elektronische Leistungsschaltereinrichtungen durch kostengünstige Sicherungseinrichtungen der Erfindung ersetzt werden können. Dies spart nicht nur Kosten, sondern erlaubt es auch, Bauraum und Gewicht einzusparen, was besonders für den mobilen Einsatz bei Fahrzeugen, wie Wasserfahrzeugen, Luftfahrzeugen, Kraftfahrzeugen, oder dergleichen vorteilhaft ist.

Die Erfindung eignet sich daher besonders bei Hochspannungsanwendungen im Sinne der Normung, das heißt, Spannungen, die größer sind als die elektrischen Spannungen gemäß der Niederspannungsrichtlinie, das heißt, der Richtlinie 2014/35/EU des Europäischen Parlaments und des Rates vom 26. Februar 2014.

Die pyrotechnische Zündeinrichtung ist in der DE 10 2016 124 176 A1 ausführlich erläutert, weshalb diesbezüglich auf diese Offenbarung ergänzend verwiesen wird. Der Offenbarungsgehalt dieser Druckschrift soll als vom Umfang der vorliegenden Offenbarung umfasst gelten.

Die wenigstens eine Sensoreinheit kann dazu dienen, die gewünschte physikalische Auslösegröße zu erfassen. Die physikalische Auslösegröße kann beispielsweise ein elektrischer Strom, eine elektrische Spannung, eine Temperatur, Kombinationen hiervon und/oder dergleichen sein. Bei der elektrischen Spannung kann es sich zum Beispiel um eine Potentialdifferenz zwischen zwei vorgebbaren elektrischen Potentialen des Energieversorgungsnetzes handeln. Der elektrische Strom kann beispielsweise der elektrische Strom an einer vorgegebenen Stelle des Energieversorgungsnetzes sein. Besonders vorteilhaft erweist es sich, wenn der elektrische Strom derjenige ist, von dem die Sicherungseinrichtung gemäß der Erfindung durchströmt wird, und zwar im nicht ausgelösten Zustand. Des Weiteren kann als Auslösekriterium auch eine Stromänderung, besonders im Falle eines Kurzschlusses, herangezogen werden. Die Stromänderung kann beispielsweise aus einer Stromerfassung abgeleitet oder auch indirekt über eine Spannungserfassung ermittelt werden. Natürlich können auch Kombinationen hiervon vorgesehen sein, um die Auslösecharakteristik der Sicherungseinrichtung bedarfsgerecht bereitstellen zu können.

Die Zündeinheit kann als elektronische Schaltungsanordnung in Hardwarebauweise oder auch zumindest teilweise mittels einer Rechnereinheit wie einem Mikroprozessor oder dergleichen realisiert sein. Vorzugsweise ist die Zündeinheit unmittelbar im Bereich der pyrotechnischen Auslöseeinrichtung angeordnet, sodass aufwendige elektrische Isolationsmaßnahmen oder dergleichen eingespart werden können. Darüber hinaus kann vorgesehen sein, dass die Zündeinheit eine elektrische Energiequelle umfasst, die beispielsweise einen Kondensator, eine Batterie, Kombinationen hiervon oder dergleichen umfassen kann. Darüber hinaus kann natürlich auch vorgesehen sein, dass aus dem bestimmungsgemäßen Betrieb der Sicherungseinrichtung Energie gewonnen wird, beispielsweise aufgrund eines Stromflusses durch die Sicherungseinrichtung oder dergleichen. Dem Grunde nach kann natürlich auch eine externe Energiequelle zur Energieversorgung der Zündeinheit vorgesehen sein. Diese braucht jedoch nicht permanent elektrische Energie für den bestimmungsgemäßen Betrieb der Zündeinheit bereitzustellen, sondern es kann vorgesehen sein, dass eine Energieversorgung nur zu vorgebbaren Zeitpunkten oder Betriebszuständen erfolgt.

Die Sensoreinheit kann beispielsweise von der Sicherungseinrichtung umfasst sein, beispielweise am elektrischen Leiter angeordnet sein. Die Sensoreinheit kann jedoch auch entfernt angeordnet sein, beispielsweise wenn die Sensoreinheit dazu dient, eine elektrische Spannung zu erfassen, eine Temperatur zu erfassen oder dergleichen. In diesem Fall kann die Sensoreinheit über eine Leitung das Sensorsignal zur Zündeinheit übermitteln. Die Leitung kann eine elektrische Leitung sein, wobei dann das Sensorsignal ein elektrisches Signal ist. Dem Grunde nach kann die Leitung jedoch beispielsweise auch ein Lichtleiter sein, bei dem das Sensorsignal mittels Licht an die Zündeinheit übermittelt wird. Auch weitere Ausgestaltungen sind denkbar. Dem Grunde nach kann das Sensorsignal auch drahtlos, beispielsweise über Funk übermittelt werden.

Der elektrische Leiter kann beispielsweise aus einem elektrisch gut leitfähigem Material wie Aluminium, Kupfer, Legierungen hiervon und/oder dergleichen gebildet sein. Die erfindungsgemäße Konstruktion erlaubt es, ein besonders kompaktes Bauteil zu erhalten, welches eine Sicherungseinrichtung bildet und zugleich eine zuverlässige, unter Umständen auch einstellbare Funktionalität bereitzustellen vermag. Zugleich kann Sicherungseinrichtung also sehr kostengünstig und kompakt ausgebildet sein.

Das Energieversorgungsnetz weist zumindest einen ersten und einen zweiten Netzwerkteil auf, die mittels wenigstens einer elektrischen Verbindungseinrichtung abhängig von einem jeweiligen Verbindungszustand miteinander elektrisch verbunden sein können. Die Verbindungseinrichtung kann zum Beispiel einen Leistungsschalter, einen Lastschalter oder einen Trennschalter aufweisen. Vorzugsweise ist das Energieversorgungsnetz als gleichspannungsbeaufschlagtes Energieversorgungsnetz ausgebildet, wie es besonders bei Fahrzeugen zum Einsatz kommen kann. Ein derartiges Energieversorgungsnetz kann zum Beispiel bei einem Wasserfahrzeug eine elektrische Antriebseinheit mit elektrischer Energie versorgen. Die elektrische Antriebseinheit kann zu diesem Zweck zum Beispiel den ersten Netzwerkteil bilden oder ein Teil hiervon sein. Ein zweiter Netzwerkteil kann zum Beispiel eine elektrische Ruder- beziehungsweise Steuereinrichtung sein.

Tritt beispielweise im Bereich der Antriebseinheit eine Störung auf, beispielsweise ein Kurzschluss oder dergleichen, könnte dieser Kurzschluss zugleich sich auf die Steuer- beziehungsweise Rudereinrichtung auswirken, die einen zweiten Netzwerkteil bilden kann oder von diesem umfasst sein kann. In diesem Fall wäre es günstig, wenn mittels der Verbindungseinrichtung eine möglichst rasche Trennung der beiden Netzwerkteile erreicht werden kann. Zwar ist es möglich, ein entsprechendes Auslösen der Verbindungseinrichtung zu realisieren, indem beispielsweise ein Leistungsschalter in den ausgeschalteten Schaltzustand geschaltet wird. Jedoch ist diese Funktionalität begrenzt bei einem Lastschalter und noch weniger bei einem Trennschalter verfügbar. Daher sind bei derartigen Verbindungselementen zusätzliche Sicherungsmaßnahmen zu treffen. Dies kann mit der erfindungsgemäßen Sicherungseinrichtung erreicht werden. Diese erlaubt es nämlich, auch einen großen elektrischen Strom bei einer großen Spannung zuverlässig unterbrechen zu können, auch wenn es sich um einen Gleichstrom handelt. Die Verbindungseinrichtung weist also eine entsprechende Schalteinheit auf, mittels der abhängig vom Schaltzustand die Verbindung zwischen dem ersten und dem zweiten Netzwerkteil elektrisch hergestellt werden kann. Die Schalteinheit kann hierzu eine Sicherungseinrichtung der Erfindung aufweisen. Die Schalteinheit kann als elektromechanische oder elektronische Schalteinheit ausgebildet sein. Als elektromechanische Schalteinheit können einer oder mehrere Schaltkontakte vorgesehen sein. Als elektronische Schalteinheit können ein oder mehrere elektronische Schaltelemente wie Thyristoren, Transistoren, die im Schaltbetrieb betrieben werden, und/oder dergleichen vorgesehen sein. Die Schalteinheit stellt die Schaltfunktionalität bereit, die wenigstens einen eingeschalteten Schaltzustand und einen ausgeschalteten Schaltzustand zwischen wenigstens zwei elektrischen Anschlüssen der Verbindungseinrichtung aufweist.

Auch wenn sich die Anwendung der Erfindung besonders für Fahrzeuge wie Kraftfahrzeuge, Wasserfahrzeuge und Luftfahrzeuge eignet, kann die beschriebene Erfindung auch in bei industriellen gleichspannungsbeaufschlagten Energieversorgungsnetzen zur Anwendung kommen.

Die Erfindung erlaubt es also, bei einem Energieversorgungsnetz den Aufwand für die Verbindungseinrichtung zu reduzieren, in dem zum Beispiel an Stelle eines Leistungsschalters lediglich ein Trennschalter zum Einsatz kommt, der mit einer Sicherungseinrichtung der Erfindung kombiniert werden kann. Dies reduziert nicht nur den Kostenaufwand, sondern auch den Aufwand in Bezug auf Bauraum und Gewicht.

Gemäß einer Weiterbildung wird vorgeschlagen, dass wenigstens die Auslöseeinheit, die Zündeinheit und der elektrische Leiter in einem gemeinsamen Gehäuse angeordnet sind. Dadurch kann eine einzeln handhabbare Baugruppe wie bei einem Schmelzsicherungseinsatz erreicht werden, die nach einem Auslösevorgang auf einfache Weise durch eine nichtausgelöste Sicherungseinrichtung ersetzt werden kann. Das Gehäuse ist beispielsweise aus einem elektrischen Isolationsmaterial wie Keramik, Glas, Kunststoff und/oder dergleichen gebildet.

Darüber hinaus wird vorgeschlagen, dass die Sicherungseinrichtung eine Anzeigeeinheit aufweist, mittels der ein Auslösezustand visuell anzeigbar ist, wobei die Anzeigeeinheit vorzugsweise am Gehäuse angeordnet ist. Es kann also durch ein Bedienpersonal einfach erkannt werden, ob die Sicherungseinrichtung beziehungsweise deren Auslöseeinheit ausgelöst worden ist, ohne dass es einer messtechnischen Erfassung des Auslösezustands bedarf. Insbesondere kann erreicht werden, dass kein Eingriff in das elektrische Energieversorgungsnetz zu erfolgen braucht, um den Auslösezustands zu ermitteln. Dadurch kann die Sicherheit verbessert werden. Besonders vorteilhaft erweist es sich, wenn das Gehäuse die Anzeigeeinheit aufweist beziehungsweise die Anzeigeeinheit am Gehäuse angeordnet ist. Dadurch kann eine separate Anzeigeeinheit vermeiden und zugleich auch eine unmittelbar erkennbare Zuordnung der Anzeigeeinheit zur Sicherungseinrichtung erreicht werden. Die Anzeigeeinheit kann beispielsweise als Anzeigeelement auf einem äußeren Umfang des Gehäuses visuell erkennbar angeordnet sein. Beispielsweise kann es sich um ein Sichtfenster, eine Auslösefarbe, oder dergleichen handeln. Darüber hinaus kann natürlich auch eine elektronische Anzeigeeinheit vorgesehen sein, die den entsprechenden Auslösezustand anzeigt. Dadurch kann ein Bedienungspersonal sofort den Auslösezustand erkennen.

Gemäß einer Weiterbildung wird vorgeschlagen, dass die Sicherungseinrichtung wenigstens eine mit der Zündeinheit kommunikationstechnisch gekoppelte Zündleitung zum Übermitteln eines sicherungseinrichtungsexternen Zündsignals aufweist. Mittels der Zündleitung kann erreicht werden, dass weitere Schutzeinrichtungen, insbesondere Sicherungseinrichtungen, synchronisiert ausgelöst werden können. Zum Beispiel kann über die Zündleitung der Zündeinheit auch ein externes Zündsignal zugeführt werden, damit die Zündung ausgelöst werden kann. Es kann aber auch vorgesehen sein, dass die Zündeinrichtung ihr Zündsignal zum Auslösen der Auslöseeinheit über die Zündleitung an eine dritte Stelle, die extern zur Sicherungseinrichtung ist, überträgt. Damit kann zum Beispiel eine übergeordnete Steuerungseinrichtung des Energieversorgungsnetzes informiert werden, dass die Sicherungseinrichtung ausgelöst hat. Natürlich können mittels des Zündsignals auch weitere Hilfseinrichtungen, wie im Folgenden noch beschrieben werden wird, synchronisiert betrieben werden, um Auslöseprozess der Sicherungseinrichtung zu unterstützen. Auch eine Kombination hiervon kann vorgesehen sein.

Darüber hinaus kann vorgesehen sein, dass die Zündeinheit als aktiver oder passiver Transponder ausgebildet ist oder einen solchen aufweist, um zum Beispiel Daten von einer dritten Stelle zu empfangen beziehungsweise an eine dritte Stelle zu übermitteln. Zu diesem Zweck kann der Transponder für Nahfunk, Infrarot oder dergleichen als Kommunikationsmedium ausgebildet sein.

Darüber hinaus wird vorgeschlagen, dass die Sicherungseinrichtung wenigstens eine mit genau einem der Anschlusskontakte elektrisch gekoppelte Kurzschlussimpulseinheit aufweist, die mit der wenigstens einen Zündleitung gekoppelt ist und ausgebildet ist, abhängig von einem Erfassen des Zündsignals einen Kurzschlussimpuls bereitzustellen. Diese Weiterbildung erlaubt es, insbesondere bei einer großen abzubauenden Energie, den Auslösemechanismus weiter zu verbessern, vorzugsweise auch zu entlasten, indem mittels der Kurzschlussimpulseinheit ein Teil des Stromimpulses übernommen wird, bevor oder während die Sicherungseinrichtung auslöst. Dadurch ist es möglich, die Sicherungseinrichtung insgesamt nicht nur zuverlässiger und sicherer zu betreiben, sondern auch die von der Sicherungseinrichtung aufzunehmende Energie zu reduzieren. Insbesondere der bei einer Unterbrechung besonders eines Gleichstromes auftretende Lichtbogen kann dadurch besser unterdrückt werden. Darüber hinaus kann auch die abschaltbare Kurzschlussleistung der Sicherungseinrichtung durch die Kurzschlussimpulseinheit erhöht werden. Auch Kombinationen hiervon können vorgesehen sein. Die Kurzschlussimpulseinheit kann zum Beispiel eine Reihenschaltung aus einem Kondensator und einem elektronischen Schaltelement wie einem Thyristor, einem Transistor und/oder dergleichen aufweisen.

Gemäß einer Weiterbildung wird vorgeschlagen, dass die Zündeinheit ausgebildet ist, einen elektrischen Widerstand der Auslöseeinheit zu erfassen und abhängig hiervon Widerstandssignal bereitzustellen. Dies erlaubt es, die Funktion der Sicherungseinrichtung, insbesondere deren Auslösezustand auch dann zu ermitteln, wenn das elektrische Energieversorgungsnetz, insbesondere die Sicherungseinrichtung, zumindest teilweise spannungslos ist. Durch Bereitstellen des Widerstandssignals kann somit auch eine Funktionsbereitschaft der Sicherungseinrichtung, insbesondere deren Auslöseeinheit, ermittelt werden, und zwar vorzugsweise unabhängig von einer Energieversorgung der Sicherungseinrichtung. Das Widerstandssignal kann beispielsweise auf der Zündleitung bereitgestellt werden. Es kann aber auch auf einer separaten Leitung der Sicherungseinrichtung über Funk und/oder auf der Anzeigeeinheit bereitgestellt werden. Das Widerstandssignal kann auch einer Auswertung durch die Zündeinheit oder dergleichen unterzogen werden, wobei dann vorzugsweise zumindest ein hiervon abhängiges Auswertesignal bereitgestellt wird. Das Auswerten kann zum Beispiel einen Vergleich mit wenigstens einem Widerstandsvergleichswert aufweisen. Der Widerstandsvergleichswert kann einen oberen und/oder unteren Wert für das Widerstandssignal angeben. Vorzugsweise sind wenigstens zwei Widerstandsvergleichswerte vorgesehen, und zwar ein oberer und ein unter Widerstandsvergleichswert, wobei ein Funktionsbereitschaftssignal abgegeben wird, wenn der erfasste Wert des Widerstandssignals zwischen den beiden Widerstandsvergleichswerten ist. Bei einer nicht ausgelösten intakten Auslöseeinheit kann der elektrische Widerstand zum Beispiel in einem Bereich von etwa 0,5 Ω bis etwa 5 Ω betragen. Eine elektrische Spannung beim Erfassen des Widerstands beziehungsweise bei einer Widerstandsmessung kann zum Beispiel in einem Bereich von etwa 50 mV bis etwa 0,5 V betragen. Vorzugsweise ist diese elektrische Spannung derart gewählt, dass ein Auslösen der Auslöseeinheit zuverlässig vermieden werden kann.

Es wird ferner vorgeschlagen, dass die Zündeinheit eine elektronische Schaltungsanordnung aufweist, die zumindest teilweise mittels eines Halbleiterchips bereitgestellt ist. Auf diese Weise kann die Zündeinheit besonders einfach in die Sicherungseinrichtung integriert werden. Insbesondere wenn lediglich ein einziges Gehäuse für die Sicherungseinrichtung vorgesehen ist, erlaubt es diese Ausgestaltung, die Zündeinheit besonders kostengünstig und raumsparend in die Sicherungseinrichtung zu integrieren. Der Halbleiterchip kann zu diesem Zweck eine integrierte Schaltungsanordnung aufweisen, die nicht nur Hardware-Bauteile realisieren kann, sondern je nach Bedarf - auch eine Rechnereinheit umfassen kann, die mittels eines Rechnerprogramms gesteuert werden kann. Besonders bei dieser Ausgestaltung erweist es sich als vorteilhaft, wenn die Schaltungsanordnung zugleich auch Art eines Transponders, insbesondere eines passiven Transponders ausgebildet ist. Dadurch ist es nämlich möglich, die Schaltungsanordnung hinsichtlich ihrer Funktionalität zumindest teilweise einstellbar auszugestalten, um sie so an individuelle Betriebsumstände bedarfsgerecht anpassen zu können. Insgesamt kann dadurch der Betrieb der Sicherungseinrichtung weiter verbessert werden. So kann es beispielsweise vorgesehen sein, dass bei einem Austausch der Sicherungseinrichtung, weil eine ausgelöste Sicherungseinrichtung durch eine neue Sicherungseinrichtung ersetzt werden soll, die spezifischen Betriebsdaten, insbesondere in Bezug auf das Auslösen, in die neue Sicherungseinrichtung eingespeichert werden können. Dadurch kann ein zuverlässiger sicherer Betrieb auch nach dem Auswechseln der Sicherungseinrichtung weiterhin gewährleistet werden. Die hierfür erforderlichen Daten können zum Beispiel in einer Datenbank gespeichert sein und mittels eines Geräts, welches die Kommunikationsverbindung zur Zündeinheit herstellen kann, entsprechend übertragen und in der Schaltungsanordnung gespeichert werden.

Es wird ferner vorgeschlagen, dass die Sicherungseinrichtung eine Prüfeinheit zum Prüfen der elektrischen Verbindung zwischen den Anschlusskontakten aufweist. Mittels der Prüfeinheit kann somit die Funktionalität beziehungsweise der Auslösezustand der Sicherungseinrichtung erfasst werden. Die Prüfeinheit erlaubt es somit, festzustellen, ob die Sicherungseinrichtung im nicht ausgelösten Zustand ist, also eine gute elektrische Verbindung zwischen den beiden Anschlusskontakten besteht, oder ausgelöst hat, also eine Unterbrechung der elektrischen Verbindung zwischen den beiden Anschlusskontakten vorliegt. Darüber hinaus können natürlich auch weitere prüfbare Eigenschaften mittels der Prüfeinheit geprüft beziehungsweise erfasst werden. Auf diese Weise kann nach Art einer Selbstdiagnose die Funktionalität der Sicherungseinrichtung festgestellt werden. Auch die hierbei ermittelten Daten können über den Transponder für externe Geräte beziehungsweise Datenbanken zur Verfügung gestellt werden.

Gemäß einer vorteilhaften Weiterbildung wird vorgeschlagen, dass die Sensoreinheit einen Stromsensor aufweist, der ausgebildet ist, einen elektrischen Strom im elektrischen Leiter zu erfassen und abhängig vom erfassten elektrischen Strom ein Stromsignal bereitzustellen. Der Stromsensor ist zu diesem Zweck vorzugsweise am elektrischen Leiter angeordnet und erfasst den diesen elektrischen Leiter durchströmenden Strom. Damit ist die Sensoreinheit vorzugsweise Bestandteil der Sensoreinrichtung und besonders bevorzugt im Gehäuse der Sensoreinrichtung angeordnet. Der Stromsensor kann darüber hinaus dazu dienen, die Einheiten der Sensoreinrichtung mit elektrischer Energie für ihren bestimmungsgemäßen Betrieb zu versorgen. Der Stromsensor kann ein Stromsignal bereitstellen, welches vom erfassten elektrischen Strom abhängig ist. In alternativen Ausgestaltungen oder ergänzend hierzu kann auch vorgesehen sein, dass der Stromsensor außerhalb der Sicherungseinrichtung beziehungsweise des Gehäuses angeordnet ist und einen anderen Strom als den Strom im elektrischen Leiter erfasst. Auch hier kann eine Auslösebedingung vorgesehen sein, die zum Auslösen der Sicherungseinrichtung führen kann.

Darüber hinaus wird vorgeschlagen, dass die Zündeinheit ausgebildet ist, das Stromsignal mit einem vorgebbaren Stromvergleichswert zu vergleichen und die pyrotechnische Auslöseeinheit abhängig von dem Vergleich auszulösen. Damit kann eine genau einstellbare Auslösecharakteristik erreicht werden. Bei dem Vergleich können ergänzend auch weitere Parameter berücksichtigt werden, um die pyrotechnische Auslöseeinheit auslösen zu können, beispielsweise eine Temperatur der Sicherungseinrichtung, eine Umgebungstemperatur, eine aktuelle Betriebsspannung der Energieversorgungseinrichtung und/oder dergleichen. Der Stromvergleichswert kann vorzugsweise einstellbar gewählt sein und gemäß den voran beschriebenen Möglichkeiten programmiert werden. Dies gilt natürlich gleichermaßen auch für die weiteren Parameter.

Ein Vorteil ist die Richtungserkennung des Kurzschlussstromes. Dies ermöglicht zum Beispiel eine Identifikation, wo sich der Kurzschluss befindet und ob es erforderlich diese Sicherungseinrichtung auszulösen. Dadurch kann identifiziert werden, ob der Kurzschlussstrom in Richtung des Kurzschlusses fließt oder ob er aus einer Quelle durch die Sicherung fließt. Dies kann insbesondere relevant sein, wenn mehr als zwei Verbraucher oder Energieerzeuger an einem Gleichspannungszweig angeschlossen sind und ein fehlerhafter Verbraucher oder Energieerzeuger selektiv herausgetrennt werden soll. Hierdurch kann sich eine automatische Selektivität ergeben, welche bei Schmelzsicherungen von den Schmelzkennlinien und der spezifischen Konfiguration abhängt und ein individuelles Engineering erfordert. Eine vergleichbare Identifikation wäre auch über Spanungsmessungen realisierbar.

Gemäß einer weiteren Ausgestaltung wird vorgeschlagen, dass die Zündeinheit ausgebildet ist, das Stromsignal hinsichtlich einer Richtung des Stromflusses auszuwerten und das Zündsignal auf der Zündleitung abhängig von der Auswertung bereitzustellen. Dadurch kann erreicht werden, dass das Zündsignal über die Zündleitung an einer externen Stelle zur Verfügung steht, beispielsweise für Auswertezwecke, für Meldezwecke oder für weitere Auslösefunktionen in Bezug auf di elektrische Sicherheit oder dergleichen. Vorzugsweise ist das Zündsignal im Wesentlichen zeitgleich zum Aktivieren der pyrotechnischen Auslöseeinheit. Je nach Bedarf kann das Zündsignal jedoch auch zeitlich versetzt hierzu sein.

Weiterhin wird vorgeschlagen, dass an jedem der Anschlusskontakte jeweils wenigstens eine Kurzschlussimpulseinheit angeschlossen ist, wobei das Auslösen des Kurzschlussimpulses abhängig von der ermittelten Richtung des elektrischen Stromes erfolgt. Dadurch kann erreicht werden, dass beim Auslösen die Strombelastung der Sicherungseinrichtung beziehungsweise des elektrischen Leiters reduziert wird, um so das Auslösen zuverlässiger und sicherer zu gestalten. Durch die Kurzschlussimpulseinheit ist es nämlich möglich, einen Teil des den elektrischen Leiter durchströmenden Stromes vor der Sicherungseinrichtung bereits kurzzeitig abzuleiten, sodass während des - wenn auch kurzen - Auslösezeitraums die Strombelastung der Sicherungseinrichtung möglichst gering ist, wodurch die abzuschaltende Energie reduziert werden kann. Je nach Bedarf kann unter Umständen jedoch auch vorgesehen sein, dass der elektrische Leiter während des Auslösens mit einem zusätzlichen Stromimpuls beaufschlagt wird. Es kann auch vorgesehen sein, dass lediglich die angeschlossene Leitung, an der der Kurzschluss auftritt, hinsichtlich der Strombeaufschlagung reduziert wird. Auch Kombinationen hiervon können vorgesehen sein. Beispielsweise braucht abhängig von der Richtung des elektrischen Stromes nur eine der beiden Kurzschlussimpulseinheit ausgelöst zu werden.

Es wird ferner vorgeschlagen, dass die Sicherungseinrichtung eine Kommunikationseinheit aufweist. Die Kommunikationseinheit kann zum Beispiel von dem vorgenannten Transponder umfasst sein oder durch diesen bereitgestellt sein. Die Kommunikationseinheit kann dazu dienen, vorzugsweise drahtlos eine Kommunikationsverbindung zu einer Kommunikationsgegenstelle herzustellen. Die Kommunikationsgegenstelle kann zum Beispiel ein Laptop, ein PDA, aber auch ein WLAN-Router und/oder dergleichen sein. Durch die Kommunikationseinheit ist es möglich, die Einheiten der Sicherungseinrichtung, insbesondere die Zündeinheit kommunikationstechnisch an die Kommunikationsgegenstelle zu koppeln und auf diese Weise Daten auszutauschen, beispielsweise während des bestimmungsgemäßen Betriebs erfasste Betriebsdaten, Auslösedaten oder dergleichen, oder auch Betriebsdaten an die Sicherungseinrichtung zu übermitteln, die dort gespeichert werden in einer Speichereinheit und dazu dienen, Einstellungen für den bestimmungsgemäßen Betrieb vorzunehmen. Eine solche Einstellung kann zum Beispiel der Stromvergleichswert oder dergleichen sein.

Die Verbindungseinrichtung weist vorzugsweise eine Schalteinheit auf, die Aufnahmeeinheit zur lösbaren Anordnung der Sicherungseinrichtung aufweist. Die Schalteinheit kann beispielsweise ein Leistungsschalter, ein Lastschalter, ein Trennschalter oder dergleichen sein. Vorzugsweise ist die Schalteinheit jedoch durch einen Trennschalter gebildet. Die Aufnahmeeinheit kann entsprechende Aufnahmekontakte zum Aufnehmen der Anschlusskontakte der Sicherungseinrichtung aufweisen, die diese lösbar mit der Sicherungseinrichtung verbinden. Die Aufnahmekontakte können für eine Steck- und/oder Schraubverbindung ausgebildet sein. Dadurch kann die Schalteinheit mit der Sicherungseinrichtung eine handhabbare Baueinheit bilden.

Vorzugsweise erweist es sich, wenn die Sicherungseinrichtung mit einem Trennschalter kombiniert ist, der in der Regel nicht für das Schalten eines elektrischen Stromes ausgelegt ist. Die Schaltfunktionalität bezüglich des elektrischen Stromes kann in diesem Fall durch die Sicherungseinrichtung bereitgestellt werden. Dies erlaubt es besonders kostengünstig und bauraumreduziert eine Verbindungseinrichtung zum Verbinden von wenigstens zwei Netzwerkteilen des elektrischen Energieversorgungsnetzes bereitzustellen. Dem Grunde nach kann diese Ausgestaltung jedoch auch für einen Lastschalter oder einen Leistungsschalter vorgesehen sein.

Weiterhin wird vorgeschlagen, dass das elektrische Energieversorgungsnetz eine mit wenigstens einem Anschlusskontakt der Schalteinheit elektrisch gekoppelte Kurzschlussimpulseinheit zum gesteuerten Bereitstellen eines Kurzschlussimpulses aufweist. Bei dieser Ausgestaltung ist die Kurzschlussimpulseinheit sicherungseinrichtungsextern ausgebildet und braucht nicht in die Sicherungseinrichtung integriert zu sein oder mit ihr zusammen angeordnet zu sein. Die Schalteinheit kann hierfür Mittel bereitstellen, die es erlauben, die Kurzschlussimpulseinheit mit der Zündleitung der Sicherungseinrichtung zu koppeln. Hierfür können separate geeignete Verbindungsmittel vorgesehen sein. Es kann auch vorgesehen sein, dass die Sicherungseinrichtung eine aus einem Gehäuse der Sicherungseinrichtung herausragende Zündleitung aufweist, die lediglich mit der Kurzschlussimpulseinheit gekoppelt wird. Auch weitere Ausgestaltungen hierzu sind denkbar.

Gemäß einer Weiterbildung wird vorgeschlagen, dass wenigstens zwei Sicherungseinrichtungen unmittelbar in Reihe geschaltet sind und die Verbindungseinrichtung beziehungsweise das elektrische Energieversorgungsnetz ausgebildet ist, die wenigstens zwei Sicherungseinrichtungen gleichzeitig oder zeitversetzt auszulösen. Diese Weiterbildung kann berücksichtigen, dass bei besonders großen Auslösebeanspruchungen das Problem auftreten kann, dass die Sicherungseinrichtung im ausgelösten Zustand keine ausreichende elektrische Trennung bewirkt. Die Sicherheit nach einem Auslösen kann verbessert werden. Beispielsweise können die Sicherungseinrichtungen zeitversetzt ausgelöst werden, wobei der Zeitversatz zum Beispiel etwa einige wenige Mikrosekunden oder dergleichen. Darüber hinaus kann natürlich auch vorgesehen sein, dass die Sicherungseinrichtungen im Wesentlichen zeitgleich ausgelöst werden, beispielsweise um eine Belastung der Sicherungseinrichtungen bei der Auslösung zu verteilen.

Die für die erfindungsgemäße Sicherungseinrichtung angegebenen Vorteile und Wirkungen gelten natürlich gleichermaßen auch für die mit der erfindungsgemäßen Sicherungseinrichtung ausgerüstete Verbindungseinrichtung und das mit der erfindungsgemäßen Sicherungseinrichtung ausgerüstete elektrische Energieversorgungsnetz und umgekehrt.

Die vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen verwendbar, ohne den Rahmen der Erfindung zu verlassen.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren allein gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Es zeigen:
- FIG 1: in einer schematischen reduzierten Schaltbilddarstellung einen Ausschnitt aus einem Gleichspannungsversorgungsnetz mit zwei Netzwerkteilen, wobei die Netzwerkteile über elektrische Verbindungseinrichtungen miteinander elektrisch koppelbar sind, wobei die Verbindungseinrichtung jeweils eine Sicherungseinrichtung aufweist;
- FIG 2: eine schematische Schaltbilddarstellung einer Sicherungseinrichtung gemäß FIG 1;
- FIG 3: eine weitere schematische Schaltbilddarstellung eines Gleichspannungsversorgungsnetzes mit zwei Netzwerkteilen, die jeweils über eine Sicherungseinrichtung gemäß FIG 2 miteinander elektrisch koppelbar sind, wobei das Gleichspannungsversorgungsnetz zum Beaufschlagen mit Mittelspannung ausgebildet ist;
- FIG 4: eine schematische Schaltbilddarstellung wie FIG 3, wobei das Gleichspannungsversorgungsnetz hier für eine Beaufschlagung mit Niederspannung ausgebildet ist;
- FIG 5: eine schematische Seitenansicht der Sicherungseinrichtung gemäß FIG 2; und
- FIG 6: eine schematische Schaltbildansicht eines über zwei Sicherungseinrichtungen an einen Gleichspannungszwischenkreis angeschlossenen Wechselrichters, wobei zwischenkreisseitig zusätzlich eine Kurzschlussimpulseinheit vorgesehen ist.

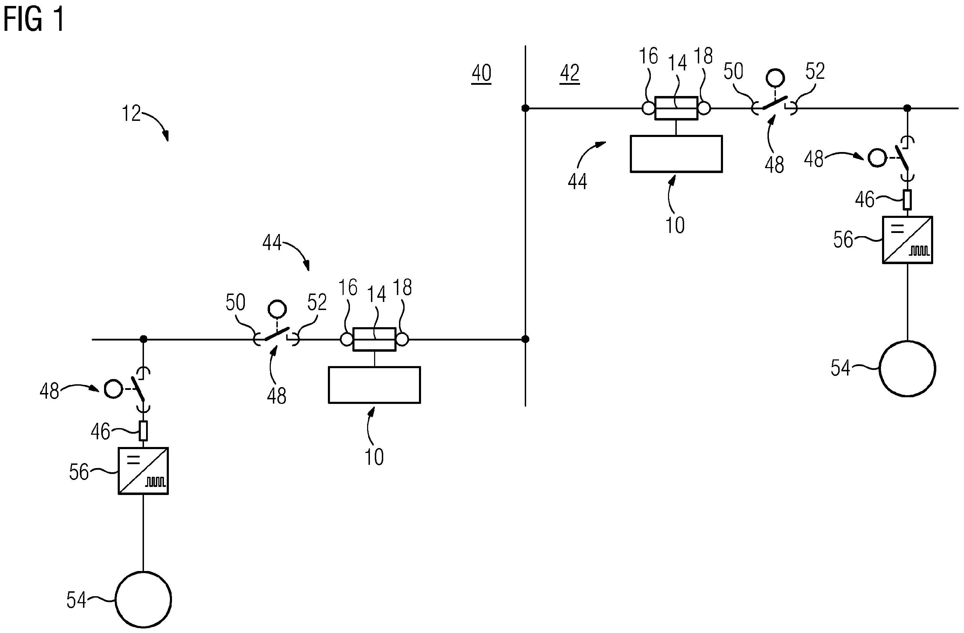

FIG 1 zeigt in einer schematisch reduzierten Schaltbilddarstellung ein Gleichspannungsversorgungsnetz 12, welches für eine nicht dargestellte Fähre als Wasserfahrzeug zur elektrischen Energieversorgung der angeschlossenen elektrischen Einrichtungen dient. Das Gleichspannungsversorgungsnetz 12 weist ein erstes Netzwerkteil 40 und ein zweites Netzwerkteil 42 auf. Jedes der Netzwerkteile 40, 42 ist über eine jeweilige Verbindungseinrichtung 44 des jeweiligen Netzwerkteils 40, 42 elektrisch koppelbar, und zwar abhängig von einem jeweiligen Verbindungszustand. Lediglich exemplarisch sind für die Netzwerkteile 40, 42 elektrische Einrichtungen dargestellt, und zwar jeweils ein Wechselrichter 56, an dem eine jeweilige elektrische Maschine, hier eine Asynchronmaschine 54, angeschlossen ist, wobei der Wechselrichter 56 über eine Schmelzsicherung 46 und einen Trennschalter 48 mit dem jeweiligen Netzwerkteil 40 beziehungsweise 42 elektrisch koppelbar ist. Das Gleichspannungsversorgungsnetz 12 kann beliebig mit weiteren beliebigen Netzwerkteilen wie zum Beispiel Generatoren, Batterien, Brennstoffzellen, und/oder dergleichen erweitert werden, wobei jedes weitere Netzwerkteil vorzugsweise durch die Verbindungseinrichtung als Gruppe oder auch als einzelner Abgang abgesichert werden kann.

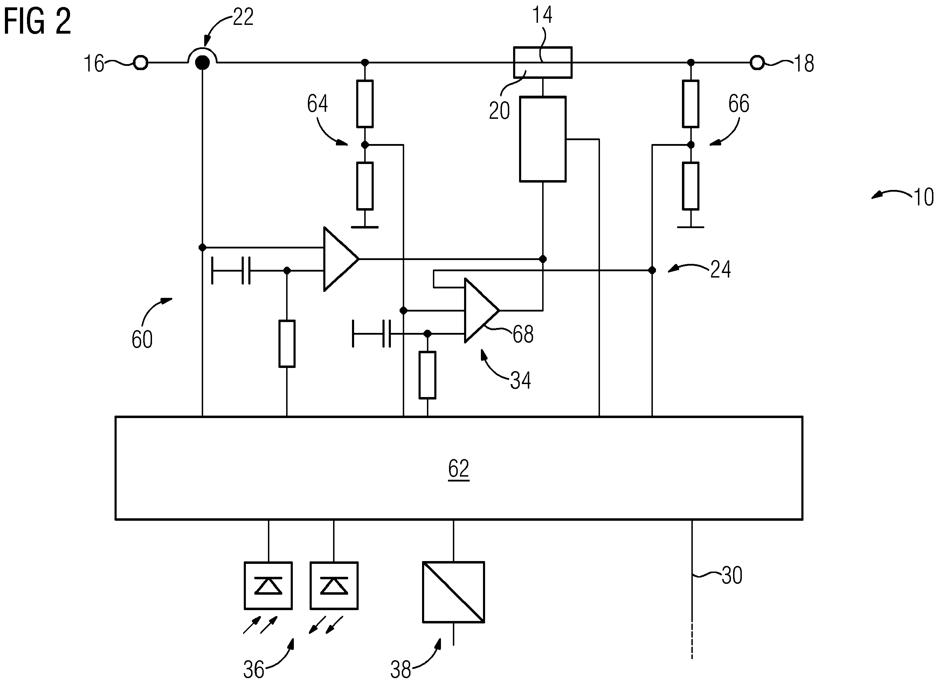

Die Verbindungseinrichtungen 44 weisen jeweils eine Reihenschaltung aus einem Trennschalter 48 mit Anschlusskontakten 50, 52 und einer Sicherungseinrichtung 10 mit Anschlusskontakten 14, 16 auf. Die Sicherungseinrichtung 10 wird im Folgenden anhand von FIG 2 weiter erläutert. Der Trennschalter 48 ist zur galvanisch sichtbaren und sicheren Trennung des Netzwerks ausgebildet. Er kann auch als Lasttrennschalter ausgeführt sein, um die Möglichkeit zu bereitzustellen, einen Laststrom betriebsmäßig schalten zu können.

Die Sicherungseinrichtung 10 dient vorliegend unter anderem dazu, dass, wenn ein elektrischer Strom, der die Sicherungseinrichtung 10 durchströmt, größer als ein vorgebbarer Vergleichswert ist, irreversibel auslöst und das jeweilige Netzwerkteil 40, 42 vom Rest des Gleichspannungsversorgungsnetzes 12 trennt. Darüber hinaus ist vorliegend mit dem Trennschalter 48 die Möglichkeit gegeben, das jeweilige Teilnetz 40, 42 reversibel vom Rest des Gleichspannungsversorgungsnetzes 12 trennen zu können. Auch wenn die beiden Netzwerkteile 40, 42 vorliegend dem Grunde nach gleich ausgebildet sind, ist dies für die Funktion der Erfindung irrelevant. Je nach Bedarf können an die Netzwerkteile 40, 42 unterschiedliche elektrische Einrichtungen zum Zwecke der Energieverteilung angeschlossen sein.

FIG 2 zeigt in einer schematischen Schaltbilddarstellung eine Schaltungsanordnung beziehungsweise Schaltungsstruktur der Sicherungseinrichtung 10, wie sie in FIG 1 zum Einsatz kommt.

Zu erkennen ist, dass die Sicherungseinrichtung 10 zwei Anschlusskontakte 16, 18 aufweist, die vorliegend mittels einer elektrischen Leitung 14 miteinander elektrisch leitend verbunden sind. Die elektrische Leitung 14, die als Rohr ausgebildet sein kann, kann aus einem geeigneten Metall beziehungsweise einer Metalllegierung oder dergleichen gebildet sein. Die elektrische Leitung 14 ist zumindest teilweise von einer pyrotechnischen Auslöseeinheit 20 umgeben beziehungsweise innerhalb der als Rohr ausgebildeten Leitung 14 angeordnet, die, wie im Folgenden noch erläutert werden wird, einen zündfähigen Stoff aufweist, der es erlaubt, die elektrische Leitung 14 zumindest teilweise zu zerstören und dadurch die elektrische Verbindung zwischen den Anschlusskontakten 16, 18 zuverlässig zu unterbrechen, insbesondere auch wenn ein Gleichstrom fließt.

Zum Unterbrechen ist vorgesehen, dass die pyrotechnische Auslöseeinheit 20 an eine Zündeinheit 24 angeschlossen ist, die ein geeignetes Zündsignal bereitstellt, um die pyrotechnische Auslöseeinheit 20 auszulösen und damit die elektrische Verbindung zwischen den Anschlusskontakten 16, 18 zu unterbrechen. Die Funktion der pyrotechnischen Auslöseeinheit ist im Stand der Technik beispielsweise in der DE 10 2016 124 176 A1 beschrieben, weshalb von weiteren detaillierten Erläuterungen hierzu abgesehen wird.

An der elektrischen Leitung 14 ist ferner ein Stromsensor 22 angeschlossen, der ein Stromsensorsignal liefert, welches über eine Auswerteschaltung 60 der Zündeinheit 24 zur Verfügung gestellt werden kann. Die Auswerteschaltung 60 kann von der Zündeinheit 24 umfasst sein. Die Auswerteschaltung 60 umfasst eine Vergleichsschaltung 68, die das Stromsensorsignal mit einem Stromvergleichswert vergleicht. Dadurch kann die pyrotechnische Auslöseeinheit abhängig von dem Vergleich ausgelöst werden. Darüber hinaus besteht die Möglichkeit, das Stromsensorsignal beziehungsweise Stromsignal hinsichtlich einer Richtung des Stromflusses auszuwerten und das Zündsignal abhängig der der erfassten Richtung des Stromes abzugeben. Ferner kann ein entsprechendes Signal über eine Zündleitung 30, die an die Zündeinheit 24 angeschlossen ist, für externe Einrichtungen zur Verfügung gestellt werden, wie dies im Folgenden noch weiter erläutert werden wird.

Über die Zündeinheit 24 ist vorliegend auch vorgesehen, die als Detonator ausgebildete Auslöseeinheit 20 messtechnisch auf Funktion zu testen. Dies kann zum Beispiel durch eine sensitive Widerstandsmessung erfolgen. Die Messung kann über die Zündeinheit 24 und die dadurch vorhandene elektrische Verbindung zum Detonator erfolgen. Diese Testfunktion ermöglicht eine Verifizierung und Sicherstellung aller im Gleichspannungsversorgungsnetz 12 vorhandenen Sicherungseinrichtungen, bevor das Gleichspannungsversorgungsnetz 12 in Betrieb gesetzt und mit elektrischer Spannung beaufschlagt wird.

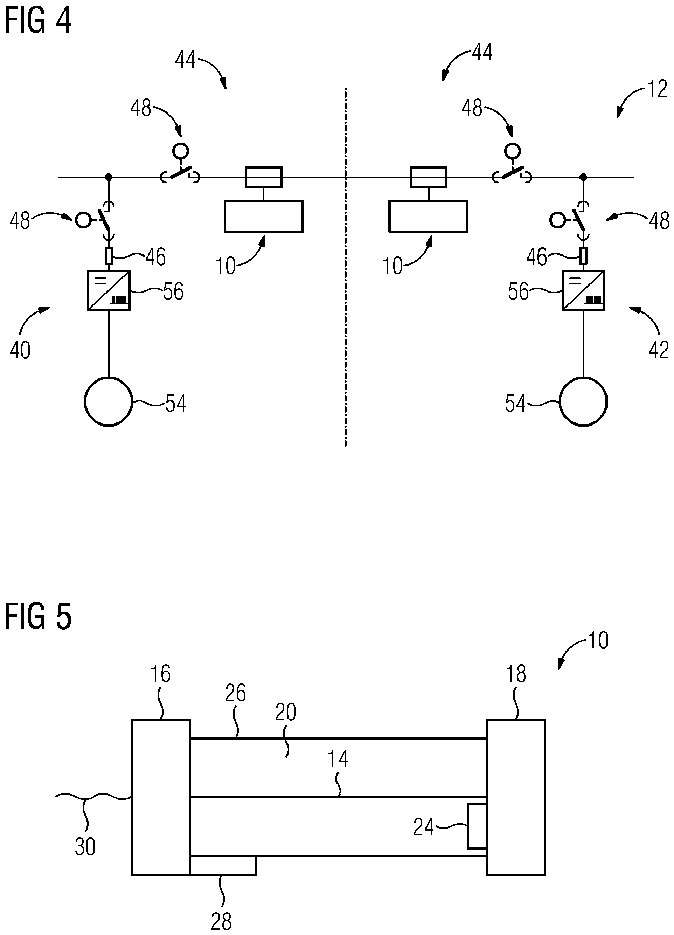

Die Schaltungsanordnung, die die Zündeinheit 24 sowie weitere Einheiten, insbesondere auch eine Rechnereinheit 62 umfasst, ist als Halbleiterchip ausgebildet und dadurch in einem Gehäuse 26 der Sicherungseinrichtung 10 integrierbar (FIG 5). Dadurch kann erreicht werden, dass die Sicherungseinrichtung 10 als dem Grunde nach zweipoliges Bauteil wie die Schmelzsicherung 46 gehandhabt werden kann. In alternativen Ausgestaltungen können die Einheiten der Sicherungseinrichtung separate Komponenten sein, insbesondere auch der Stromwandler. Bei Mittelspannung ist es weiterhin vorteilhaft, die Elektronik auf das Spannungsniveau der Sicherungseinrichtung zu legen. In diesem Fall können die Signale von der Elektronik nach außen sicher isoliert werden, zum Beispiel durch Verwendung von Lichtwellenleiter oder dergleichen. Eine Energieversorgung der Elektronik kann leitungsgebunden von außen erfolgen, wobei auch hier vorzugsweise eine sichere elektrische Trennung erfolgt. Alternativ kann die Energieversorgung auch direkt aus dem Spannungspotential der Sicherungseinrichtung generiert werden.

Wie in FIG 5 dargestellt, weist das Gehäuse 26 eine Anzeigeeinheit 28 auf, mittels der ein Auslösezustand der Sicherungseinrichtung 10 visuell anzeigbar ist. Vorliegend ist vorgesehen, dass es sich um eine Signalfarbe handelt, die nach dem Auslösen der Sicherungseinrichtung 10 visuell erfassbar dargestellt wird oder die Farbe ändert. Hierbei kann es sich um einen Stoff handeln, der aufgrund einer thermischen Einwirkung, die durch die Detonation der pyrotechnischen Auslöseeinheit 20 aktiviert werden kann, den gezeigten Farbzustand zu ändern. Natürlich sind auch andere Anzeigemittel denkbar, beispielsweise eine graphische oder alphanumerische Anzeigeeinheit oder dergleichen. Auch die Anzeigeeinheit 28 ist vorzugsweise integriert mit dem Gehäuse 26 ausgebildet.

Die Sicherungseinrichtung 10 weist ferner die kommunikationstechnisch mit der Zündeinheit 24 gekoppelte Zündleitung 30 auf, die dem Übermitteln eines sicherungseinrichtungsexternen Zündsignals dient. Damit können weitere Schutzeinrichtungen synchronisiert betätigt beziehungsweise ausgelöst werden.

Die Sicherungseinrichtung 10, insbesondere deren Schaltungsanordnung, umfasst ferner eine Energieversorgungseinrichtung 38, über die der Sicherungseinrichtung 10 elektrische Energie für ihren bestimmungsgemäßen Betrieb zugeführt werden kann. In alternativen Ausgestaltungen kann hier jedoch auch eine interne Energieversorgungseinrichtung vorgesehen sein, die beispielsweise elektrische Energie aus dem Stromfluss im elektrischen Leiter 14 bezieht oder dergleichen.

Darüber hinaus umfasst die elektrische Sicherungseinrichtung 10 eine Kommunikationseinheit 36, die vorliegend als optische Kommunikationsverbindung ausgebildet ist. Dem Grunde nach kann die elektrische Sicherungseinrichtung 10 jedoch auch nach Art eines passiven Transponders ausgebildet sein, bei dem die Kommunikationsverbindung nur dann aktiviert wird, wenn über eine externe entsprechende Gegenstelle ein Kommunikationssignal mit entsprechender Energie zugeführt wird. Die Kommunikationseinheit 36 kann für eine unidirektionale oder auch für eine bidirektionale Kommunikation ausgebildet sein.

Besonders vorteilhaft erweist es sich, wenn über die Kommunikationseinheit 36 Betriebsdaten beziehungsweise Betriebsparameter zugeführt werden können, um die Sicherungseinrichtung 10 für ihre bestimmungsgemäße Anwendung einstellen zu können, beispielsweise einen Stromvergleichswert vorgeben zu können oder dergleichen. In einer vereinfachten Ausgestaltung kann die Elektronik beziehungsweise die Schaltungsanordnung der Sicherungseinrichtung 10 auch analog ausgeführt sein und eine digitale, insbesondere binäre, Signalschnittstelle aufweisen.

Die Sicherungseinrichtung 10 beziehungsweise deren Schaltungsanordnung umfasst ferner eine Prüfeinheit 34 zum Prüfen der elektrischen Verbindung zwischen den Anschlusskontakten 16, 18. Zu diesem Zweck können für jeden der beiden Anschlusskontakte 16, 18 entsprechende Spannungsteiler 64, 66 vorgesehen sein, die an die elektrische Leitung 14 im Bereich des jeweiligen Anschlusskontakts 16, 18 angeschlossen sind. Mittelabgriffe der Spannungsteiler 64, 66 sind an eine Vergleichsschaltung 68 angeschlossen, die zugleich auch mittels der Rechnereinheit 62 steuerbar ist. Die Vergleichsschaltung 68 lieft ein entsprechendes Vergleichssignal an die Zündeinheit 24, die abhängig hiervon ein Zündsignal bereitzustellen vermag. Ein Vergleich von Spannungsmessungen kann des Weiteren als redundantes Auslösekriterium zur Strommessung oder Stromänderungsgeschwindigkeit zur Erkennung verwendet werden. Hierdurch kann eine erhöhte Sicherheit erreicht werden. Darüber hinaus kann dieses Signal durch die Rechnereinheit 62 verarbeitet werden und über die Kommunikationseinheit 36 abfragbar bereitgestellt werden. Dadurch ist es möglich, die Sicherungseinrichtung 10 auch für eine Fernwartung nutzbar zu machen.

Je nach Bedarf kann die Sicherungseinrichtung 10 auch zusätzliche weitere Funktionalitäten aufweisen, beispielsweise einen Temperatursensor zum Erfassen einer Temperatur des Gehäuses 26, sowie auch eine Leitung zum Zuführen eines Zündimpulses von einer externen Stelle und/oder dergleichen. Dies ist in den FIG jedoch nicht dargestellt.

FIG 5 zeigt in einer schematischen Seitenansicht ein Beispiel für die Sicherungseinrichtung 10, wie sie zuvor anhand von FIG 2 erläutert worden ist. In dieser Ausgestaltung ist vorgesehen, dass die gesamte Schaltungsanordnung der Sicherungseinrichtung 10 als Zündeinheit 24 mit allen weiteren Einheiten auf einem Halbleiterchip integriert ausgebildet ist. Dadurch sind die Zündeinheit 24 sowie alle weiteren Einheiten auf einfache Weise in die Sicherungseinrichtung 10 integrierbar, sodass lediglich ein einzelnes handhabbares Bauteil bereitgestellt zu werden braucht. Dadurch kann die Sicherungseinrichtung 10 nach Art eines Sicherungseinsatzes wie bei der Schmelzsicherung 46 zum Einsatz kommen.

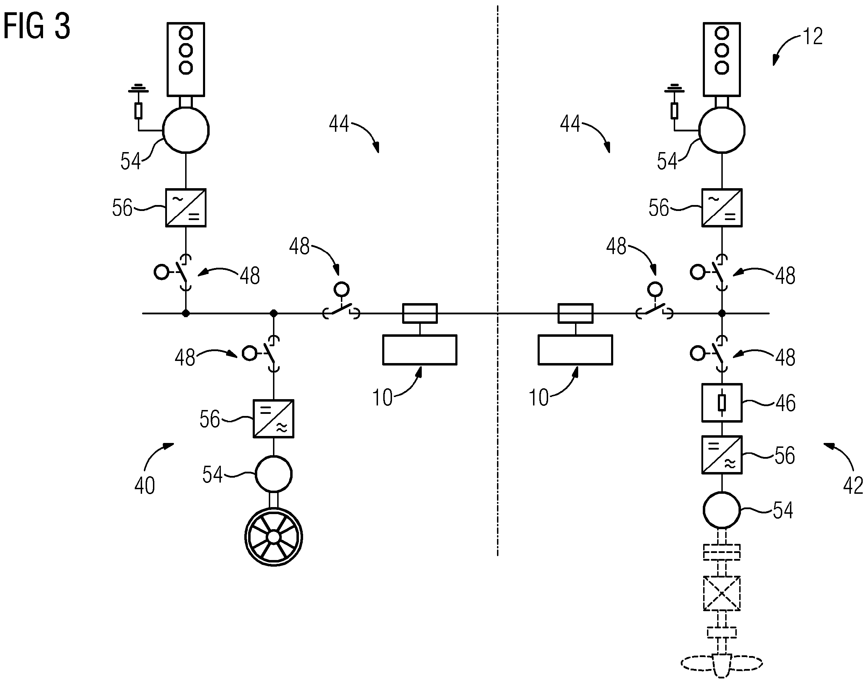

FIG 3 zeigt in einer schematischen Schaltbilddarstellung ein Gleichspannungsversorgungsnetz 12 für Mittelspannung, wie es dem Grunde nach von der Schaltungsstruktur bereits anhand von FIG 1 erläutert wurde, weshalb diesbezüglich auf die entsprechenden Ausführungen verwiesen wird. In dieser spezifischen Konfiguration sind zwei Gleichspannungsversorgungsnetze in zwei Zonen dargestellt, die hier Netzwerkteile 40, 42 bilden, die über eine jeweilige Verbindungseinrichtung 44 miteinander elektrisch koppelbar sind, und zwar abhängig von den jeweiligen Verbindungszuständen der Verbindungseinrichtungen 44. Die Verbindungseinrichtungen 44 wurden bereits anhand von FIG 1 erläutert, weshalb auf die diesbezüglichen Ausführungen ergänzend verwiesen wird. In dieser speziellen Ausgestaltung als Kopplung zweier Gleichspannungsversorgungsnetze in zwei Zonen wird eine Kombination eines Trennschalters oder eines Lasttrennschalters in einer Reihenschaltung mit der Sicherungseinrichtung 10 angewendet. Der Trennschalter oder Lasttrennschalter ist in der Lage den elektrischen Verbindungspfad betriebsmäßig elektrisch zu trennen beziehungsweise mit Laststrom zu schalten. Er hat aber keine Möglichkeit im Fehlerfall einen hierbei auftretenden Kurzschlussstrom abzuschalten. Der Kurzschlussschutz wird durch die Sicherungseinrichtung 10 realisiert. FIG 3 zeigt als elektrische Energiequellen Generatoren die beispielhaft für verschiede mögliche Energiequellen stehen. Zu erkennen ist, dass im unteren linken Zweig die Asynchronmaschine 54 einen ersten Propellerantrieb (Thruster) betätigt, wohingegen im unteren rechten Zweig die Asynchronmaschine 54 eine Antriebswelle mit einem Antriebspropeller als zweiten Propellerantrieb des Wasserfahrzeugs betätigt. Auch diese sind nur beispielhaft für verschiedenste elektrische Einrichtungen. Es können andere Typen von elektrischen Maschinen sowie auch andere passive elektrische Einrichtungen zur Anwendung kommen. Weitere Funktionen können vorgesehen sein, wie es in den jeweiligen oberen Zweigen dargestellt ist.

Dem Grunde nach kann mit der Erfindung die folgende Funktionsweise erreicht werden.

Die Schutzfunktion, beispielsweise ein Kurzschluss in einer Zone und schnelle Trennung der anderen Zone, übernimmt bei der Lösung mit einer Sprengsicherung beziehungsweise Sicherungseinrichtung in Kombination mit einem No-Load disconnector beziehungsweise Trennschalter die Sprengsicherung.

Die Funktion des betriebsmäßigen Öffnens und Schließens des bus tie übernimmt der No-Load disconnector. Der Bus tie kann geöffnet oder geschlossen werden, wenn kein Strom mehr über den bus tie fliest, das heißt,
- vor Betrieb des Systems oder nach Stillsetzung,
- oder es wird durch das Energiemanagement / Powermanagement sichergestellt, dass der Strom vor dem Öffnen oder Schließen etwa null ist.

Da die Schutzfunktion ein selteneres Ereignis ist kann akzeptiert werden, dass im Falle der Auslösung der Sprengsicherung diese getauscht werden kann. Nach der Auslösung ist der Betrieb allerdings erst mal weiter möglich, da die beiden Zonen getrennt wurden. Die Funktionalität ist daher etwas eingeschränkter als bei einem solid-state breaker beziehungsweise Leistungsschalter, aber der Vorteil der Sprengsicherung mit No-Load disconnector ergibt sich durch:
- kostengünstigere Lösung verglichen mit einem Solid State breaker
- geringere Durchleitverluste verglichen mit einem Solid State breaker

Dieses ist zum Beispiel für kleinere Schiffe eine attraktive Variante.

FIG 4 zeigt in einer schematischen Darstellung wie FIG 1 eine weitere Ausgestaltung der Sicherungseinrichtung für ein Gleichspannungsversorgungsnetz 12, welches mit Niederspannung beaufschlagt ist. Die Funktion und Komponenten entsprechen im Wesentlichen dem, was bereits anhand von FIG 1 erläutert wurde, weshalb diesbezüglich auf die entsprechenden Ausführungen zur FIG 1 verwiesen wird. Auch hier ist vorgesehen, dass eine Kopplung der beiden Netzwerkteile 40, 42 über die jeweiligen Verbindungseinrichtungen 44 erfolgt, wie es bereits anhand von FIG 3 erläutert wurde.

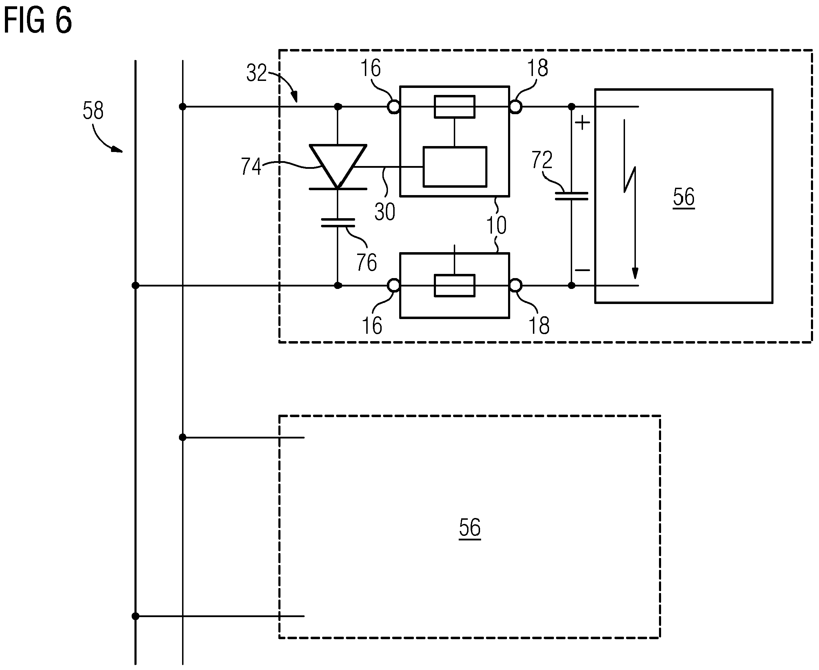

FIG 6 zeigt eine weitere Ausgestaltung für ein Energieversorgungsnetz, welches vorliegend durch einen Gleichspannungszwischenkreis 58 bereitgestellt ist, an dem mindestens zwei Lastabgänge, hier in Form von Wechselrichtern 56, angeschlossen sind. Für einen der beiden Wechselrichter 56 ist eine Schaltungsstruktur dargestellt, die vorliegend vorsieht, dass der Gleichspannungszwischenkreis 58 über jeweilige Sicherungseinrichtungen 10 an einen Zwischenkreiskondensator 72 angeschlossen ist, an dem seinerseits der Wechselrichter 56 angeschlossen ist. Die Sicherungseinrichtungen 10 entsprechen dem, was bereits zuvor erläutert wurde, weshalb auf die diesbezüglichen Ausführungen verwiesen wird. Der zweite dargestellte Kasten weist die gleiche Schaltungsstruktur wie der zuvor beschriebene auf.

Zusätzlich ist zwischenkreisseitig eine Kurzschlussimpulseinheit 32 vorgesehen, die vorliegend eine Reihenschaltung aus einem Thyristor 74 und einem Kondensator 76 aufweist. Der Thyristor 74 weist einen Gate-Anschluss auf, welcher an die Zündleitung 30 einer der beiden Sicherungseinrichtungen 10 angeschlossen ist. Durch diese Schaltungsstruktur kann das Auslösen der Sicherungseinrichtung 10 unterstützt werden, insbesondere wenn ein Kurzschluss im Bereich eines der Wechselrichter 56 auftritt. In diesem Fall kann die Sicherungseinrichtung 10 gleichzeitig oder sehr kurz vor dem Auslösen der pyrotechnischen Auslöseeinheit 20 über die Zündleitung 30 ein Zündsignal an den Thyristor 74 abgeben, sodass die Kurzschlussimpulseinheit 32 kurzzeitig zumindest einen Teil des Kurzschlussstroms übernehmen kann und so das Auslösen der pyrotechnischen Auslöseeinheit 20 unterstützen kann und kann damit den Energieeintrag in die Sicherungseinrichtung 10 reduzieren. Das Auslösen der Sicherungseinrichtung 10 kann dadurch zuverlässiger und sicherer erfolgen.

Bei der in Fig 6 darstellen Variante ist durch die Verwendung der Sicherungseinrichtung 10 ein Schutz für mindestens zwei, oder mehr Lasten, welche auch alternative Energiequellen oder Kombinationen aus beiden sein können, realisiert. Die Verwendung der Sicherungseinrichtung 10, wie zuvor beschrieben, ermöglicht eine elektronische Selektivität und Sensitivität, ohne spezifische Designparameter der Sicherungseinrichtung, wie es bei einer Schmelzsicherung erforderlich wäre. Daher ist bei der Verwendung der Sicherungseinrichtung 10 nicht erforderlich, eine aufwendige Auslegung oder Simulation für die richtige Sicherungsauswahl durchzuführen. Daher ist es weiterhin möglich, nur ein Design der Sicherungseinrichtung 10 für einen sehr großen Anwendungsbereich zu nutzen. Hier ist beispielsweise ein Bereich von größer 1:100, beispielhaft etwa 100 A bis etwa 1000 A Betriebsstrom bei gleicher Ausführung der Sicherungseinrichtung, realisierbar. Durch den Entfall der vielen Schmelzstellen wie bei einer Schmelzsicherung ist zudem ein elektrischer Widerstand der Sicherungseinrichtung 10 deutlich kleiner als bei einer Schmelzsicherung, was wiederum zu deutlich reduzierten Verlusten führen kann.

Die Idee der Erfindung ist unter anderem zumindest eine aktive Auslösung über Strom (absolut und di/dt) und/oder Spannungserfassung mit selektiver Auslösung zu realisieren. Durch die Verwendung von verschiedenen Auslösekriterien wird die Auslösesicherheit erhöht. Des Weiteren soll ein zusätzlicher Backup Schutz durch die interne vorhandene thermische Auslösung, zum Beispiel interner Detonator eine zusätzliche höhere Sicherheit gewährleisten. Ein Betrieb mit interner thermischer Auslösung ohne aktive Auslösung ist auch möglich. Ebenso ist eine aktive Auslösung ohne thermische Auslösung möglich.

Die externe Auslösung kann durch einen Detonator beziehungsweise eine pyrotechnische Auslöseeinheit erreicht werden, der beziehungsweise die von außen elektrisch gezündet werden kann. Die interne Auslösung kann durch einen Detonator im Inneren der Power Sicherung erreicht werden. Dieser kann zum Beispiel durch eine Punktuelle hohe Temperatur bei einem Überlaststrom ausgelöst werden.

Die Anwendungen können on-shore im Industriebereich sein oder off-shore für Marine, Drilling oder andere offshore Applikationen sein.

Es kann eine schnelle Stromerfassung in dem DC Bus integriert sein. Weiterhin kann eine zusätzliche Spannungserfassung für die Auslösung verwendet werden, beispielsweise um eine erhöhte Auslösesicherheit erreichen zu können.

Ein weiterer Vorteil der Power Sicherung beziehungsweise Sicherungseinrichtung der Erfindung ist, dass diese nicht Altern wie Halbleitersicherungen. Ein Pyro-Element ist in der Regel sicher nutzbar für 10+ Jahre. Hier wäre es auch möglich nach 10+ Jahren als Service nur den Detonator zu tauschen. Ein weiterer Vorteil der Sicherungseinrichtung 10 ist, dass eine Selektivität und eine Sensitivität elektronisch erreicht werden kann und die Auslegung und detaillierte Auswahl der passenden Schmelzsicherungen entfällt. Änderungen im Gleichspannungsversorgungsnetz durch Veränderung der angeschlossenen elektrischen Einrichtungen oder deren Anzahl führt bei Schmelzsicherungen dazu, dass die Selektivität oder Sensitivität und damit der Schutz nicht mehr gewährleistet ist. Dieses ist bei der Sicherungseinrichtung der Erfindung nicht der Fall. Dieser Vorteil reduziert auch die erforderliche Varianz bei der Sicherungseinrichtung.

Es kann eine Sicherungseinrichtung beziehungsweise Powerfuse zur kommandierten Trennung von Stromkreisen bis etwa 1500V ohne Wirkung nach außen erreicht werden. Eine Funktion kann auch noch nach bis zu 30 Jahren ohne Wartung möglich sein. Halbleitersicherungen können dagegen bei Überlastströmen im kritischen Bereich vorgeschädigt werden. Dies ist auch kritisch bei einer Parallelschaltung. Derartige vorgeschädigte Sicherungen können dann in einem weiteren Fehlerfall im schlimmsten Fall einen Lichtbogen außerhalb der Sicherung erzeugen, weil zum Beispiel ihr Gehäuse bricht.

Um höhere Spannungen erreichen zu können, können Sicherungen auch in Reihe geschaltet werden. Durch die geringe Streuung der Detonatoren ist eine Reihenschaltung möglich, ohne größere Spannungsunsymmetrien über der Reihenschaltung zu erhalten.

In einer weiteren Ausprägung kann bei einer Reihenschaltung der Sicherungen auch eine zeitversetzte Zündung im ps Bereich erfolgen. Dieses erleichtert bei hohen abzuschaltenden Energien eine Entlastung. Die als erste gezündete Sicherungseinrichtung wird einen ersten Trennvorgang einleiten. Hierbei erhöht sich der Widerstand der Sicherungseinrichtung und es kann sich eine Lichtbogenspannung ausbilden. Dieser Effekt führt zu einer Reduktion des Kurzschlussstromes, der durch die zeitlich später versetzt zündende Sicherungseinrichtung nun leichter abgebaut werden kann. Auch der Energieinhalt, den die zweite Sicherungseinrichtung aufnehmen muss, ist geringer, und es kann dadurch eine sichere elektrische Trennung gewährleistet werden.

Vorteilhaft ist auch eine Erfassung, ob es zu einer Auslösung der Powerfuse gekommen ist. Dieses kann visuell durch das Aufbringen eines Temperatur - Farblackes erfolgen. Die Sicherung wird nach der Auslösung in der Regel stark erhitzt, dass der Lack auf der Sicherung die Farbe ändert und optisch leicht eine Sicherung erkannt werden kann. Im Betrieb kann eine ausgelöste Sicherung durch die Spannungsmessung identifiziert werden.

Eine weitere Idee, um das di/dt in den ersten us zu begrenzen, ist es, zum Beispiel einen Kondensator mit einem Thyristor vor der Sicherung zu platzieren, um in den ersten us das di/dt für die Powerfuse zu reduzieren und damit den abzuschaltenden Strom im Fehlerfall zu reduzieren.

Im Falle eines Kurzschlusses in einem Inverter wird über die Stromerfassung der Kurzschlussstrom erkannt und auch dessen Richtung. Fliest der Kurzschlussstrom vom DC Bus in den Inverter, so liegt die Fehlerursache innerhalb dieses Inverters. Es wird ein schnelles Auslösesignal an die Powerfuse gegebenen und gleichzeitig an ein schnelles Halbleiter Element Tl. Der di/dt Kondensator ist zu dieser Zeit nicht geladen. Die Totzeit der Powerfuse würde durch das hohe di/dt einen hohen Abschaltstrom für die Powerfuse zur Folge haben. Durch Zünden des Halbleiter T1 wird vor dem Auslösen der Powerfuse der Kurzschlussstrom innerhalb der ersten us in den di/dt Kondensator geleitet, bis dieser auf die DC Spannung aufgeladen ist. Hierdurch wird der abzuschaltende Strom in der Powerfuse reduziert. Die Schutzeinrichtung kann auch ohne die Kurzschlusseinrichtung ausgeführt sein.

Zur Vereinfachung des mechanischen Aufbaus kann die Powerfuse als optisch trennbares Element ausgeführt werden, vergleichbar eines Sicherungslasttrennschalters der derzeit für Schmelzsicherungen verwendet wird. Dadurch können die Trennfunktion und die Sicherungsfunktion kompakter in einer realisiert werden.

Eine weitere Anwendung ist, wenn nicht von einer DC Schiene in eine zweite DC Schiene eingespeist werden soll, sondern in eine Stromschiene, wie sie für die Verteilung von Energie über mehrere Decks eingesetzt wird. Physikalisch ist das das gleiche wie die zweite Schiene, ist aber ein anderer Zweck. Es kann zum Beispiel eine vertikale Stromschiene über die Decks eines Schiffes sein.

Die Ausführungsbeispiele dienen ausschließlich der Erläuterung der Erfindung und sollen diese nicht beschränken.

## Patentansprüche

1. Sicherungseinrichtung (10) für ein elektrisches Energieversorgungsnetz (12), insbesondere ein gleichspannungsbeaufschlagtes Energieversorgungsnetz, mit zwei voneinander getrennt angeordneten Anschlusskontakten (16, 18), einem mit den Anschlusskontakten (16, 18) verbundenen elektrischen Leiter (14) zum Herstellen einer elektrischen Verbindung zwischen den Anschlusskontakten (16, 18) und einer im Bereich des elektrischen Leiters (14) angeordneten pyrotechnischen Auslöseeinheit (20) zum irreversiblen Trennen der Anschlusskontakte (16, 18) durch zumindest teilweises Zerstören der elektrischen Leitung (14),
**gekennzeichnet durch**
wenigstens eine Sensoreinheit (22) zum Erfassen einer physikalischen Auslösegröße und zum Bereitstellen eines Sensorsignals abhängig von der erfassten physikalischen Auslösegröße und eine mit der Sensoreinheit (22) gekoppelte Zündeinheit (24), die ausgebildet ist, abhängig von einem vorgebbaren Wert des Sensorsignals die pyrotechnische Auslöseeinheit (20) auszulösen.

2. Sicherungseinrichtung nach Anspruch 1, **dadurch gekennzeichnet, dass** wenigstens die Auslöseeinheit (20), die Zündeinheit (24) und der elektrische Leiter (14) in einem gemeinsamen Gehäuse (26) angeordnet sind.

3. Sicherungseinrichtung nach einem der vorhergehenden Ansprüche, **gekennzeichnet durch** eine Anzeigeeinheit (28), mittels der ein Auslösezustand visuell anzeigbar ist, wobei die Anzeigeeinheit (28) vorzugsweise am Gehäuse (26) angeordnet ist.

4. Sicherungseinrichtung nach einem der vorhergehenden Ansprüche, **gekennzeichnet durch** wenigstens eine mit der Zündeinheit (24) kommunikationstechnisch gekoppelte Zündleitung (30) zum Übermitteln eines sicherungseinrichtungsexternen Zündsignals.

5. Sicherungseinrichtung nach Anspruch 4, **gekennzeichnet durch** wenigstens eine mit genau einem der Anschlusskontakte (16) elektrisch gekoppelte Kurzschlussimpulseinheit (32), die mit der wenigstens einen Zündleitung (30) gekoppelt ist und ausgebildet ist, abhängig von einem Erfassen des Zündsignals einen Kurzschlussimpuls bereitzustellen.

6. Sicherungseinrichtung nach einem der vorhergehenden Ansprüche, **dadurch gekennzeichnet, dass** die Zündeinheit (24) ausgebildet ist, einen elektrischen Widerstand der Auslöseeinheit (20) zu erfassen und abhängig hiervon ein Widerstandssignal bereitzustellen.

7. Sicherungseinrichtung nach einem der vorhergehenden Ansprüche, **dadurch gekennzeichnet, dass** die Zündeinheit (24) eine elektronische Schaltungsanordnung aufweist, die zumindest teilweise mittels eines Halbleiterchips bereitgestellt ist.

8. Sicherungseinrichtung nach einem der vorhergehenden Ansprüche, **gekennzeichnet durch** eine Prüfeinheit (34) zum Prüfen der elektrischen Verbindung zwischen den Anschlusskontakten (16, 18).

9. Sicherungseinrichtung nach einem der vorhergehenden Ansprüche, **dadurch gekennzeichnet, dass** die Sensoreinheit (22) einen Stromsensor aufweist, der ausgebildet ist, einen elektrischen Strom im elektrischen Leiter (14) zu erfassen und abhängig vom erfassten elektrischen Strom ein Stromsignal bereitzustellen.

10. Sicherungseinrichtung nach Anspruch 9, **dadurch gekennzeichnet, dass** die Zündeinheit (24) ausgebildet ist, das Stromsignal mit einem vorgebbaren Stromvergleichswert zu vergleichen und die pyrotechnische Auslöseeinheit (20) abhängig von dem Vergleich auszulösen.

11. Sicherungseinrichtung nach Anspruch 9 oder 10, **dadurch gekennzeichnet, dass** die Zündeinheit (24) ausgebildet ist, das Stromsignal hinsichtlich einer Richtung des Stromflusses auszuwerten, und das Zündsignal auf der Zündleitung (30) abhängig von der Auswertung bereitzustellen, wobei vorzugsweise an jedem der Anschlusskontakte (16, 18) jeweils wenigstens eine Kurzschlussimpulseinheit (32) zum Bereitstellen eines Kurzschlussimpulses angeschlossen ist, wobei das Auslösen des Kurzschlussimpulses abhängig von der ermittelten Richtung des elektrischen Stromes erfolgt.

12. Verbindungseinrichtung (44) zum elektrischen Verbinden von wenigstens zwei Netzwerkteilen (40, 42) eines elektrischen Energieversorgungsnetzes (12) abhängig von einem Verbindungszustand der Verbindungseinrichtung (44), mit einer Schalteinheit, **gekennzeichnet durch** wenigstens eine Sicherungseinrichtung (10) nach einem der vorhergehenden Ansprüche.

13. Verbindungseinrichtung nach Anspruch 12, **dadurch gekennzeichnet, dass** die Schalteinheit (48) eine Aufnahmeeinheit zum lösbaren Anordnen der Sicherungseinrichtung (10) aufweist, und/oder insbesondere wenigstens zwei Sicherungseinrichtungen (10) unmittelbar in Reihe geschaltet sind und die Verbindungseinrichtung (44) ausgebildet ist, die wenigstens zwei Sicherungseinrichtungen (10) gleichzeitig oder zeitversetzt auszulösen.

14. Elektrisches Energieversorgungsnetz (12) für ein Fahrzeug, insbesondere ein Wasserfahrzeug, mit wenigstens einem ersten und einem zweiten Netzwerkteil (40, 42) sowie einer elektrischen Verbindungseinrichtung (44) zum elektrischen Verbinden der wenigstens zwei Netzwerkteile (40, 42) abhängig von einem Verbindungszustand der Verbindungseinrichtung (44), **gekennzeichnet durch**
wenigstens eine Sicherungseinrichtung (10) nach einem der Ansprüche 1 bis 11 und/oder wenigstens eine Verbindungseinrichtung (44) nach einem der Ansprüche 12 oder 13.

15. Elektrisches Energieversorgungsnetz nach Anspruch 14, **dadurch gekennzeichnet, dass** wenigstens zwei Sicherungseinrichtungen (10) unmittelbar in Reihe geschaltet sind und das elektrische Energieversorgungsnetz (12) ausgebildet ist, die wenigstens zwei Sicherungseinrichtungen (10) gleichzeitig oder zeitversetzt auszulösen.
